Europäisches Patentamt

European Patent Office

Office européen des brevets

(11) Veröffentlichungsnummer: **0 035 071 B1**

# EUROPÄISCHE PATENTSCHRIFT

(45) Veröffentlichungstag der Patentschrift:
06.02.85

(51) Int. Cl.⁴: **F 16 L  25/02,** H 02 K  9/19

(21) Anmeldenummer: **80200187.5**

(22) Anmeldetag: **03.03.80**

(54) **Flexible, elektrisch isolierende Rohrverbindung.**

(43) Veröffentlichungstag der Anmeldung:
**09.09.81 Patentblatt 81/36**

(45) Bekanntmachung des Hinweises auf die Patenterteilung:
**06.02.85 Patentblatt 85/6**

(84) Benannte Vertragsstaaten:
**CH DE FR GB IT NL SE**

(56) Entgegenhaltungen:
**CH - A - 577 135**
**CH - A - 595 715**
**DE - A - 1 775 176**
**DE - A - 2 112 956**
**DE - A - 2 515 856**
**DE - A - 2 837 541**
**DE - B - 1 163 960**
**DE - B - 1 613 403**
**DE - B - 2 610 996**
**DE - U - 7 337 790**
**GB - A - 1 150 047**
**US - A - 3 232 640**
**US - A - 3 504 207**
**US - A - 3 718 830**

(73) Patentinhaber: **BBC Aktiengesellschaft Brown, Boveri & Cie., Haselstrasse, CH-5401 Baden (CH)**

(72) Erfinder: **Zerlik, Willibald, Weihermattstrasse 389, CH-5242 Birr (CH)**

ACTORUM AG

**Beschreibung**

Die Erfindung bezieht sich auf eine flexible, elektrisch isolierende Rohrverbindung gemäss dem Gattungsbegriff des Anspruchs 1. Eine Rohrverbindung dieser Gattung ist beispielsweise aus der US-A-3 504 207 bekannt.

Die Verbindung zwischen der auf der Welle angeordneten Wasserkammer und dem Wickelkopf eines Turbogenerators mit flüssigkeitsgekühlter Erregerwicklung unterliegt während des Betriebes zahlreichen Kräften, hervorgerufen durch temperaturbedingte Relativbewegungen zwischen der fest mit der Welle verbundenen Wasserkammer und dem in Axialrichtung sich gegenüber dieser beweglichen Wickelkopf einerseits, und durch fliehkraftbedingte Aufweitung des Wickelkopfes bedingte Radialbewegungen zwischen Wasserkammer und Wickelkopf andererseits. Rohrverbindungen zwischen den genannten Teilen müssen daher sowohl axiale (in Maschinenachsrichtung erfolgende) als auch quer zur Rohrverbindung (radial bezüglich der Maschinenachse) verlaufende Bewegungen ermöglichen, ohne dass die Festigkeit der Rohrverbindung einschliesslich der Anschlussarmaturen am Wickelkopf und Wasserverteilkammer beeinträchtigt wird, um die Dichtheit bei den im Betrieb herrschenden Drücken zu gewährleisten.

Die aus der US-A-3 504 207 und DE-B-1 613 403 bekannten Rohrverbindungen sind jeweils nur in Rohrlängsrichtung – radial in bezug auf die Maschinenachse bei der US-A-3 504 207, axial bei der DE-B-1 673 403 – beweglich. Eine Beweglichkeit in Querrichtung ist weder möglich noch beabsichtigt, ja sogar unerwünscht.

Die Rohrverbindung nach der CH-A-577 135 besteht aus einem Schlauchteil aus Kunststoff mit zwei an den Schlauchenden mit einem Nippel in den Schlauch hineinragenden Anschlussstücken aus Metall, die jeweils mit dem Schlauchteil durch ein an dessen Aussenumfang anliegendes hülsenförmiges Befestigungsteil verbunden sind. Das Schlauchteil ist mit einer druckfesten Aussenbewehrung versehen, die sich bis unter die beiden Befestigungsteile erstreckt. Wenigstens ein Ende des Schlauchteils dringt über das hülsenförmige Befestigungsteil hinaus vor. Die geforderten Eigenschaften werden somit von einem einzigen Bauelement, dem Kunststoffschlauch, übernommen.

Bei einer weiteren, aus der CH-A-595 715 bekannten Rohrverbindung sind an die Wasserverteilkammer Metallrohre mit zwischengeschalteten isolierenden Verbindungsgliedern zur Potentialtrennung angeschlossen. Die Metallrohre verlaufen grösstenteils in Nuten in der Rotorwelle zum rotorballenseitigen Ende des Wickelkopfes. Im Raum ausserhalb des Wickelkopfes sind flansch- und ringförmige Abstützungen vorgesehen, während die radiale Befestigung der Metallrohre unterhalb des Wickelkopfes durch Nutkeile erfolgt. Relativbewegungen zwischen Wickelkopf und den fest mit der Rotorwelle verbundene isolierenden Verbindungsgliedern werden durch Flexibilität der Metallrohre aufgenommen.

Die Erfindung, wie sie im Patentanspruch 1 gekennzeichnet ist, löst die Aufgabe, eine flexible, elektrisch isolierende Rohrverbindung zwischen der Wasserverteilkammer und dem verteilkammerseitigen Ende des Wickelkopfes an einem wassergekühlten Rotor einer elektrischen Maschine zu schaffen, die sowohl in Rohrlängsrichtung als auch quer hierzu beweglich ist, und den im Betrieb auftretenden Druck- und Fliehkraftbeanspruchungen standzuhalten vermag.

Die erfindungsgemässe Rohrverbindung zeichnet sich durch geringen Platzbedarf in axialer und radialer Richtung aus. Durch die Aufteilung der Rohrverbindung in zwei Abschnitte mit unterschiedlichen Aufgaben können beide Abschnitte den an sie gestellten Anforderungen optimal angepasst werden. Das Isolierglied wird durch die Wasserverteilkammerwandung sowohl gegen äussere Krafteinwirkungen (Fliehkraft) als auch gegen den Flüssigkeitsdruck geschützt, weil das Isolierglied vollständig in der Wandung der Wasserverteilkammer gelegen ist. Das Isolierrohr stellt die erforderliche Potentialtrennung zwischen Wasserverteilkammer und dem auf Wicklungspotential gelegenen flexiblen Glied her und dient gleichzeitig zur Führung und Abstützung der Rohrverbindung. Eine weitere Entlastung der Verbindungsstelle von Isolierglied und flexiblem Glied wird gemäss der in Anspruch 2 gekennzeichneten Weiterbildung der Erfindung erreicht. Diese aus Metall oder einem Isoliermaterial bestehende Distanzhülse kann leicht an die Aussen- bzw. Innenkonturen der Bauteile der Verbindungsstelle angepasst werden.

Grundsätzlich können zwei Arten von flexiblen Gliedern verwendet werden: Glieder, die im wesentlichen nur Bewegungen quer zur Längsachse des flexiblen Gliedes zulassen, in Längsrichtung jedoch keine Bewegungen aufnehmen können, z. B. ein- oder mehrlagig armierte, vergleichsweise dünnwandige Wellrohre, und solche, die neben Bewegungen quer zur Längsachse auch in Längsrichtung beweglich sind, z. B. sogenannte Rohrkompensatoren.

Bei der Verwendung von flexiblen Gliedern erstgenannter Art ist es zweckmässig, das verteilkammerseitige Ende des flexiblen Gliedes mit einem rohrförmigen Fortsatz zu versehen, der vorzugsweise berührungslos in eine Bohrung des Isoliergliedes hineinragt, und zwischen dem Fortsatz und dem Isolierglied eine Gleitringdichtung, vorzugsweise eine Lippendichtung, vorzusehen. Beim Einsatz von Rohrkompensatoren erübrigen sich Gleitringdichtungen, da Relativbewegungen zwischen dem (fest in der Wasserkammerwandung angeordneten) Isolierglied und der Wicklung durch den in Längsrichtung flexiblen Rohrkompensator aufgenommen werden. In diesem Fall kann das verteilkammerseitige Ende des flexiblen Gliedes unter Zwischenschaltung einer Dichtung fest mit dem Isolierglied verbunden werden.

Das Isolierglied besteht gemäss einer Ausführungsform der Erfindung nach Anspruch 5 aus einem Rohr aus Oxydkeramik, das am Aussenumfang mit einem Bund versehen ist. Dieser Bund stützt sich in axialer Richtung an der Stirnfläche einer Ausfräsung in der wasserseitigen Wandung der Wasserverteilkammer ab. In den Ringraum zwischen dem Rohr und der Ausfräsung ist eine Hülse mit Innen- und Aussendichtung eingeschoben und gegen axiale Verschiebung gesichert.

Bei der Ausgestaltung der Erfindung nach Anspruch 6 wird ein Rohr aus Oxydkeramik verwendet, das an seinen beiden Enden mit Metallhülsen versehen ist, welche teilweise mit Dichtflächen versehen sind. Nach Anspruch 7 überragt die Metallhülse das Rohr am wickelkopfseitigen Ende. Zwischen der inneren Wandung des überragenden Teils und dem rohrförmigen Fortsatz des flexiblen Gliedes ist die Gleitringdichtung angeordnet. Die verteilkammerseitige Abdichtung bzw. axiale Fixierung der Isolierhülse erfolgt vorzugsweise gemäss Anspruch 8 dadurch, dass das wasserseitige Ende der verteilkammerseitigen Metallhülse flanschartig erweitert ist, in den Ringraum zwischen Metallhülse und der wasserseitigen Wandung der Verteilkammer eine Hülse mit Innen- und Aussendichtung eingeschoben ist und am wasserseitigen Ende der Hülse, distanziert von der genannten Metallhülse, ein Sicherungsring eingebracht ist.

Beide Ausgestaltungen der Isolierhülse zeichnen sich durch hohe Temperaturbeständigkeit und mechanische Belastbarkeit aus. Gegenüber bekannten Rohrverbindungen, z. B. solchen gemäss der eingangs genannten CH-A-577 135, erlauben sie eine weit freizügigere Bemessung der Kriechwege. Zudem erlauben sie die bei wassergekühlten Rotoren unumgängliche Dichtigkeitsprüfung mit Helium, die bei Verwendung von Kunststoffen, insbesondere Polytetrafluoräthylen oder Perfluoralkoxy nur bedingt möglich ist.

Die gleichen vorteilhaften Eigenschaften weist die Ausbildung des Isoliergliedes gemäss Anspruch 9 auf, bei welcher das Isolierglied ein aussen mit einem Isoliermaterial, vorzugsweise Polyvenylidenfluorid, umhülltes Metallrohr ist, auf welches eine Schrumpfhülse aufgebracht ist. Dieser Kunststoff-Metall-Verbundkörper ist unter Zwischenschaltung einer Dichtung in die Wandung der Wasserverteilkammer eingeschoben und dort gegen axiale Verschiebung gesichert. Vorzugsweise besteht die Schrumpfhülse aus einer korrosionsbeständigen Form-Gedächtnislegierung auf Ni-Cu-Ti-Basis. Zwar ist das Isoliermaterial zwischen Metallrohr und Schrumpfhülse nicht absolut heliumdicht und neigt bei mechanischen und Temperaturbelastungen zum Fliessen, doch lassen sich die Diffusionswege ausreichend gross bemessen, und die spezifische Flächenbelastung der Schrumpffläche vermindert die Gefahr des Fliessens in erheblichem Masse.

Grundsätzlich lassen sich beide Arten flexibler Glieder mit den drei Isolierhülsen kombinieren, wobei sich die direkte (feste) Verbindung zwischen einem Oxydkeramikrohr gemäss Anspruch 5 und einem Rohrkompensator unter Umständen als kritisch erweisen könnte.

Die Erfindung wird nachstehend anhand von in der Zeichnung dargestellten Ausführungsbeispielen näher erläutert.

In der Zeichnung zeigt:

Fig. 1 ein erstes Ausführungsbeispiel einer Rohrverbindung nach der Erfindung mit einem armierten Metallschlauch als flexiblem Glied und einem Rohr aus Oxydkeramik als Isolierglied,

Fig. 1a einen Ausschnitt, der den Aufbau des armierten Metallschlauches verdeutlicht,

Fig. 2 ein zweites Ausführungsbeispiel einer erfindungsgemässen Rohrverbindung, die weitgehend der in Fig. 1 dargestellten entspricht, bei der jedoch das Isolierglied beidseitig mit Metallhülsen versehen ist,

Fig. 3 ein drittes Ausführungsbeispiel einer Rohrverbindung nach der Erfindung, bei der in Abwandlung zu den in den Fig. 1 und 2 dargestellten Ausführungen das Isolierglied ein Kunststoff-Metall-Verbundkörper ist,

Fig. 4 ein viertes Ausführungsbeispiel einer erfindungsgemässen Rohrverbindung mit einem Rohrkompensator als flexiblem Glied, bei der in Analogie zu Fig. 2 das Isolierglied beidseitig mit Metallhülsen versehen ist,

Fig. 5 schliesslich ein fünftes Ausführungsbeispiel einer Rohrverbindung nach der Erfindung mit Rohrkompensator und Kunststoff-Metall-Verbundkörper als Isolierglied.

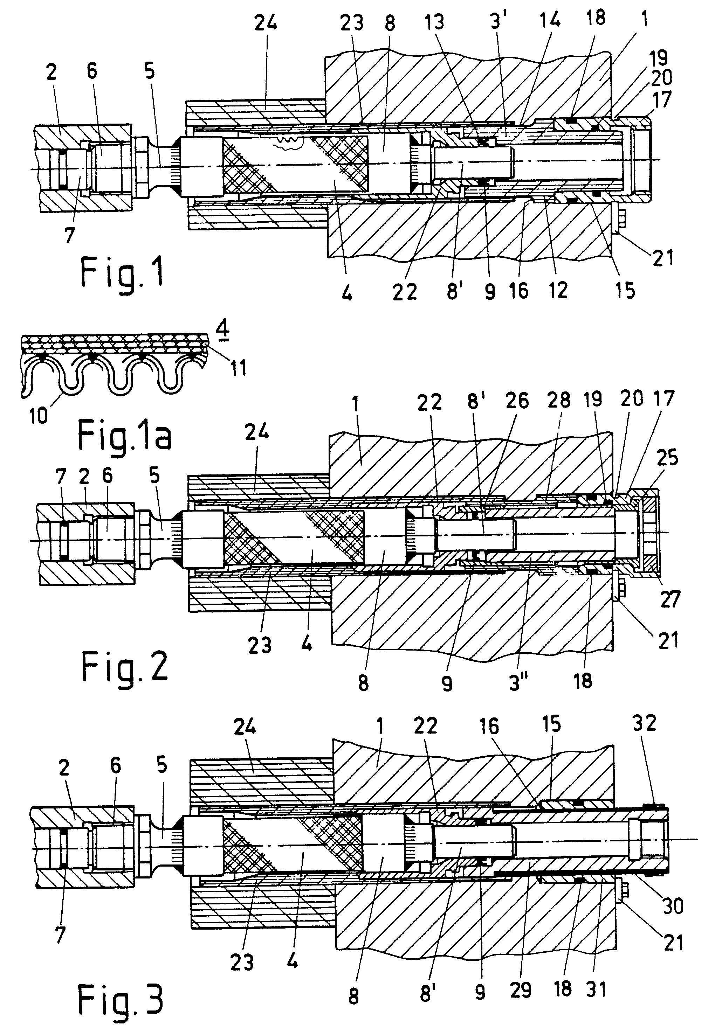

In Fig. 1 ist vom Rotor der elektrischen Maschine aus Gründen der Übersichtlichkeit lediglich ein Teil der Wasserverteilkammer 1 und das der Kühlflüssigkeitszu- bzw. -abfuhr der Rotorwicklung dienende Wasserverteilstück 2 dargestellt. Die hydraulische Verbindung zwischen beiden Teilen erfolgt durch eine Rohrverbindung mit einem Isolierglied 3' und einem flexiblen Glied 4. Das wickelkopfseitige Ende des flexiblen Gliedes 4 ist mit einer Anschlussarmatur 5, bestehend aus einem Gewindeteil 6 und einem Dichtteil 7, in das Wasserverteilstück 2 flüssigkeits- und gasdicht eingeschraubt. Das verteilkammerseitige Ende des flexiblen Gliedes ist gleichfalls mit einer Anschlussarmatur 8 versehen, die in einem rohrförmigen Fortsatz 8' endet, der in die Bohrung des Isoliergliedes 3' hineinragt, ohne es zu berühren. Eine Lippendichtung 9 stellt die Abdichtung zwischen dem Isolierglied 3' und dem flexiblen Glied 4 her und ermöglicht gleichzeitig Relativbewegungen in Axialrichtung zwischen beiden Gliedern. Wie aus Fig. 1a hervorgeht, besteht der zwischen den beiden Anschlussarmaturen liegende Teil des flexiblen Gliedes 4 aus einem doppelwandigem Wellrohr 10 aus nichtrostendem Stahl, das von einer mehrlagigen Umflechtung 11 aus Stahldraht umgeben ist. Dieser Aufbau ermöglicht Bewegungen in Richtung quer zur Längsachse des flexiblen Gliedes bei hoher Druckbelastbarkeit. In Längsrichtung kann das flexible Glied keine Bewegungen aufnehmen, da es sich infolge des in seinem Innern wirkenden Flüssigkeitsdruckes streckt.

Das Isolierglied ist ein Rohr 3' aus technischer Keramik auf der Basis von Aluminiumoxid. In seinem mittleren Abschnitt weist es einen Bund 12 auf. Das wickelkopfseitige Ende des Keramikrohres ist erweitert. Die Innenfläche 13 der Erweiterung als Dichtfläche bearbeitet. Das Keramikrohr liegt praktisch in seiner ganzen Länge innerhalb der Bohrung 14 in der Wandung der Wasserverteilkammer 1. Diese Bohrung 14 ist verteilkammerseitig mit einer Ausfräsung 15 versehen, an deren Stirnfläche 16 sich der Bund 12 des Keramikrohres 3' axial anlegt. In den Ringraum zwischen Keramikrohr 3' und Ausfräsung 15 ist eine Hülse 17 unter Zwischenschaltung einer äusseren Dichtung 18 und einer inneren Dichtung 19 eingeschoben. Eine umlaufende Ringnut 20 dient in Verbindung mit einem anschraubbaren Sicherungsplättchen 21 zur axialen Fixierung der Hülse 17 und damit des Keramikrohres 3'.

Zur Abstützung der Armatur 8 und Entlastung der Verbindungsstelle zwischen flexiblen und Isoliergied ist eine Distanzhülse 22 aus Metall vorgesehen. Diese umfasst den gesamten verteilkammerseitigen Teil und den Fortsatz 8' des flexiblen Gliedes und ragt zum Teil in die Erweiterung des Keramikrohres 3' hinein. Auf diese Weise werden auf das Keramikrohr 3' keine unzulässigen Kräfte ausgeübt. Eine der Wandung der Bohrung 14 in der Wasserkammer angepasste Isolierhülse 23 stellt die Potentialtrennung zwischen dem flexiblen Glied 4 und der Wasserkammer 1 her. Diese Isolierhülse umgibt das wickelkopfseitige Ende des Keramikrohres und erstreckt sich im wesentlichen über die gesamte Länge des flexiblen Gliedes 4, wobei der Innendurchmesser der Isolierhülse 23 im Bereich der Umflechtung 11 und der Armatur 5 derart gewählt ist, dass zwischen flexiblem Glied und Isolierhülse ein Ringraum entsteht, der die Beweglichkeit des flexiblen Gliedes quer zu seiner Längsachse gewährleistet. Die Isolierhülse 23 dient darüber hinaus zur Abstützung des flexiblen Gliedes 4 gegen Fliehkräfte.

Der aus der Wandung der Wasserverteilkammer 1 herausragende Teil des flexiblen Gliedes 4 bzw. der diesen Teil umgebende Abschnitt der Isolierhülse 23 liegt innerhalb der Bohrung eines Isolierringes 24, der die (nicht eingezeichnete) Rotorwelle umgibt und mit der Wasserverteilkammer 1 fest verbunden ist.

Mit Ausnahme der Ausbildung des Isoliergliedes stimmt die in Fig. 2 dargestellte Rohrverbindung mit der vorstehend beschriebenen überein. Gleiche Teile sind in beiden Darstellungen mit denselben Bezugsziffern versehen. Das Isolierglied besteht aus einem glatten Rohr 3'' aus technischer Keramik auf Aluminiumoxidbasis, das an beiden Enden mit Metallhülsen 25 und 26 versehen ist. Die korrosionsbeständigen Metallhülsen sind beispielsweise durch Löten mit dem Keramikrohr verbunden. Beide Metallhülsen umfassen die Enden des Keramikrohres 3'' und überragen dieses an beiden Seiten. Die Innenfläche der wickelkopfseitigen Metallhülse 26 ist als Dichtfläche für die Lippendichtung 9 ausgebildet. Die Hülse 17 weist im wesentlichen den gleichen Aufbau auf wie diejenige in Fig. 1. Zusätzlich ist ihr verteilkammerseitiges Ende mit einem Innengewinde versehen, in das ein vom verteilkammerseitigen Ende der Metallhülse 25 distanzierter Sicherungsring 27 eingeschraubt ist.

Damit in ein und dieselbe Bohrung 14 der Wasserverteilkammer wahlweise Isolierglieder nach den Fig. 1 und 2 eingesetzt werden können, ist bei der Ausführung nach Fig. 2 zusätzlich ein abgesetztes Isolierrohr 28 von der Wasserverteilkammer her in die Bohrung 14 eingeschoben, dessen im Durchmesser vermindertes Ende bis an das Ende der wickelkopfseitigen Metallhülse 26 reicht und dort gleichzeitig den Kriechweg zwischen der Metallhülse 26 und der Wandung der Bohrung 14 vergrössert.

In dem in Fig. 3 dargestellten Ausführungsbeispiel einer elektrisch isolierten Rohrverbindung besteht das Isolierglied aus einem Metallrohr 29, das mit einer Umhüllung 30 aus beispielsweise Polyvenylidenfluorid versehen ist. Im mittleren Abschnitt des Metallrohres 29 ist eine Schrumpfhülse 31 mit einer Ringnut am Aussenumfang aufgebracht. Dieses Isolierglied wird unter Zwischenschaltung einer Aussendichtung 18 von der Wasserverteilkammer her in die Bohrung 14, die ebenfalls mit einer verteilkammerseitigen Ausfräsung 15 versehen ist, eingeschoben. Das wickelkopfseitige Ende der Schrumpfhülse stützt sich an der Stirnfläche der Ausfräsung ab. Die Tiefe der Ausfräsung stimmt in etwa mit der Länge der Schrumpfhülse 31 überein. Zur axialen Sicherung des Isoliergliedes dient ein angeschraubtes Sicherungsplättchen 21. Am verteilkammerseitigen Ende des Metallrohres 29 ist ein Schrumpfring 32 angeordnet, der das Eindringen von Wasser zwischen Metallrohr 29 und Umhüllung 30 verhindert.

Beide Schrumpfhülsen 31 und 32 bestehen aus einer Form-Gedächtnislegierung auf Titan/Nickel/Kupfer-Basis. Bezüglich des Verfahrens zur Herstellung des Isoliergliedes gemäss Fig. 3 wird auf die DE-A-2 837 541 verwiesen, aus welcher alle Einzelheiten hinsichtlich Auswahl der Legierung und Herstellung der Schrumpfverbindung hervorgehen.

Allen vorstehend beschriebenen Ausführungsbeispielen gemeinsam ist ein quer zur Längsachse flexibles, in Richtung seiner Längsachse jedoch nicht flexibles Glied 4. Axiale Relativbewegungen zwischen Wasserverteilkammer und Wickelkopf erfordern dabei Stopfbuchsdichtungen an der Verbindungsstelle zwischen flexiblem und Isolierglied. Die nachstehenden Ausführungsformen der Erfindung ermöglichen es, auf eine derartige dynamisch belastete Dichtung zu verzichten, indem das flexible Glied zusätzlich in Längsrichtung in sich nachgiebig ist.

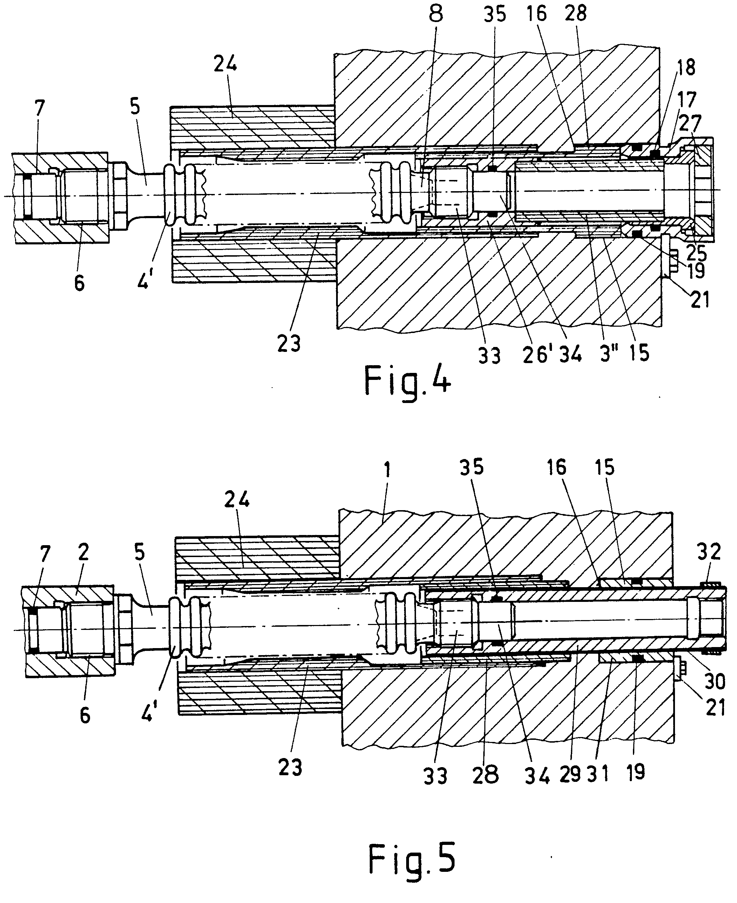

In der in Fig. 4 dargestellten Rohrverbindungen ist das flexible Glied ein Rohrkompensator 4', der beidseitig mit Anschlussarmaturen 5, 8 versehen ist. Die wickelkopfseitige Anschlussarmatur 5 entspricht derjenigen der Fig. 1 bis 3, die verteilkammerseitige Anschlussarmatur 8 weist hingegen einen Gewindeteil 33 und einen Dichtteil 34 auf, welche in die mit einem Innengewinde versehene Metallhülse 26' am wickelkopfseitigen Ende des Isoliergliedes unter Zwischenschaltung einer Ringdichtung 35 eingeschraubt sind. Das Isolierglied weist – abgesehen von der abweichenden Ausbildung der Metallhülse 26' – den gleichen Aufbau auf, wie er im Zusammenhang mit Fig. 2 oben beschrieben worden ist.

Auch bei der Ausführungsform nach Fig. 5 findet als flexibles Glied ein Rohrkompensator 4' Verwendung, dessen Aufbau mit demjenigen nach Fig. 3 übereinstimmt. Das mit Gewindeteil 33 und Dichtteil 34 versehene verteilkammerseitige Ende des Rohrkompensators 4' ist unter Zwischenschaltung einer Ringdichtung 35 in das wickelkopfseitige Ende eines mit Innengewinde und Dichtfläche und einer Kunststoffumhüllung 30 versehenen Metallrohrs 29 eingeschraubt. Der restliche Aufbau und Anordnung der Rohrverbindung entspricht der Ausführungsform gemäss Fig. 3. Zusätzlich ist das wickelkopfseitige Ende des Metallrohrs 29 mit einem Isolierrohr 28 umgeben.

Allen Ausführungsformen des Erfindungsgegenstandes gemeinsam ist die Möglichkeit, die aus Isolierglied und flexiblem Glied bestehende Rohrverbindung von der Wasserverteilkammer her zu montieren bzw. zu demontieren. So ist der grösste Aussendurchmesser des flexiblen Gliedes kleiner gewählt als die lichte Weite der Bohrung in der Wandung der Wasserverteilkammer; gleiches gilt für die Distanzhülse 22. Die Zugänglichkeit des Wasserverteilkammerinneren ist dadurch gewährleistet, dass diese in aller Regel von einem Deckring umgeben und damit verschlossen ist. Damit entfällt das zeitraubende Abziehen von Rotorkappe und Wasserverteilkammer bei Montage- oder Demontagearbeiten an den Rohrverbindungen.

Bezeichnungsliste

| | | |
|---|---|---|
| 1 | = | Wasserverteilkammer |
| 2 | = | Wasserverteilstück |
| 3' | = | Keramikrohr mit Bund |
| 3'' | = | glattes Keramikrohr |
| 4 | = | flexibles Glied |
| 4' | = | Rohrkompensator |
| 5 | = | wickelkopfseitige Anschlussarmatur |
| 6 | = | Gewindeteil |
| 7 | = | Dichtteil |
| 8 | = | verteilkammerseitige Anschlussarmatur |
| 8' | = | rohrförmiger Fortsatz |
| 9 | = | Lippendichtung |
| 10 | = | doppelwandiges Wellrohr |
| 11 | = | Stahldrahtumflechtung |
| 12 | = | Bund des Keramikrohres 3' |
| 13 | = | wickelkopfseitige Dichtfläche des Keramikrohres 3' |
| 14 | = | Bohrung in der Wasserverteilkammer |
| 15 | = | Ausfräsung |
| 16 | = | Stirnfläche der Ausfräsung 15 |
| 17 | = | Hülse |
| 18 | = | äussere Dichtung der Hülse 17 |
| 19 | = | innere Dichtung der Hülse 17 |
| 20 | = | Ringnut in der Hülse |
| 21 | = | Sicherungsplättchen |
| 22 | = | Distanzhülse |
| 23 | = | Isolierhülse |
| 24 | = | Isolierring |
| 25 | = | verteilkammerseitige Metallhülse des Keramikrohrs 3'' |
| 26, | = | wickelkopfseitige Metallhülse des |
| 26' | | Keramikrohrs 3'' |
| 27 | = | Sicherungsring |
| 28 | = | Isolierrohr |
| 29 | = | Metallrohr |
| 30 | = | Kunststoff |
| 31 | = | Schrumpfhülse |
| 32 | = | Schrumpfring |
| 33 | = | Gewindeteil am verteilkammerseitigen Ende des Rohrkompensators 4' |
| 34 | = | Dichtteil am verteilkammerseitigen Ende des Rohrkompensators 4' |
| 35 | = | Ringdichtung |

**Patentansprüche**

1. Flexible, elektrisch isolierende Rohrverbindung zwischen der Wasserverteilkammer (1) und dem verteilkammerseitigen Ende (2) des Wickelkopfes an einem wassergekühlten Rotor einer elektrischen Maschine, wobei der verteilkammerseitige Abschnitt der Rohrverbindung als Isolierglied (3'; 3''; 29, 30) ausgebildet und in der Wandung der Wasserverteilkammer (1) angeordnet ist, während der wickelkopfseitige Abschnitt der Rohrverbindung in Längsrichtung der Rohrverbindung gegenüber dem Isolierglied (3'; 3''; 29, 30) beweglich ist, dadurch gekennzeichnet, dass zwischen wickelkopfseitigem Abschnitt (5) und Isolierglied (3'; 3''; 29, 30) ein flexibles Glied (4, 4') vorgesehen ist, das in Längsrichtung der Rohrverbindung entweder gegenüber dem Isolierglied (3'; 3''; 29, 30) verschieblich angeordnet, oder in sich beweglich ist und das dem wickelkopfseitigen Abschnitt (5) auch eine Bewegung quer zur Längsrichtung der Rohrverbindung erlaubt, wobei das verteilkammerseitige Ende (8) des flexiblen Gliedes (4, 4') in die Wandung der Wasserverteilkammer (1) hineinragt, und dass das flexible Glied (4, 4') und das wickelkopfseitige Ende des Isoliergliedes (3'; 3''; 29, 30) von einer Isolierhülse (23, 28) umgeben sind, welche zwischen sich und dem flexiblen Glied (4, 4') einen Ringraum freilässt.

2. Rohrverbindung nach Anspruch 1, dadurch gekennzeichnet, dass im Bereich der Übergangsstelle zwischen Isolierglied (3'; 3''; 29, 30) und flexiblem Glied (4) eine Distanzhülse (22) vorgesehen ist, welche das verteilkammerseitige Ende (8) des flexiblen Gliedes (4) umfasst und in das Isolierglied (3'; 3''; 29, 30) hineinragt.

3. Rohrverbindung nach Anspruch 1 oder 2, dadurch gekennzeichnet, dass das verteilkammerseitige Ende (8) des flexiblen Gliedes (4) mit einem rohrförmigen Fortsatz (8') versehen ist, der vorzugsweise berührungslos in eine Bohrung des Isoliergliedes (3'; 3''; 29, 30) hineinragt und zwischen diesem Fortsatz (8') und der Innenwandung des Isoliergliedes eine Gleitringdichtung, vorzugsweise eine Lippendichtung (9), vorgesehen ist.

4. Rohrverbindung nach Anspruch 3, dadurch gekennzeichnet, dass das Isolierglied im wesentlichen durch ein Rohr (3'; 3'') aus Oxydkeramik gebildet ist.

5. Rohrverbindung nach Anspruch 4, dadurch gekennzeichnet, dass das Rohr (3') aus Oxydkeramik am Aussenumfang mit einem Bund (12) versehen ist, der sich an der Stirnfläche einer Ausfräsung (15) in der wasserseitigen Wandung der Wasserverteilkammer (1) abstützt, und dass in den Ringraum zwischen dem Rohr (3') aus Oxydkeramik und der Ausfräsung eine Hülse (17) mit Innen- und Aussendichtung (19, 18) eingeschoben und gegen axiale Verschiebung gesichert ist.

6. Rohrverbindung nach Anspruch 4, dadurch gekennzeichnet, dass das Rohr (3'') aus Oxydkeramik beidseitig mit korrosionsbeständigen Metallhülsen (25, 26) versehen ist, welche teilweise mit Dichtflächen versehen sind, die mit einer Innendichtung (19) einer in die wasserseitige Wandung der Wasserverteilkammer (1) eingesetzten Hülse (17) bzw. mit der Gleitringdichtung (9) am rohrförmigen Fortsatz (8') des flexiblen Gliedes (4) zusammenwirken.

7. Rohrverbindung nach Anspruch 6, dadurch gekennzeichnet, dass die Metallhülse (26) am wikkelkopfseitigen Ende des Rohres (3'') aus Oxydkeramik dieses überragt und die Gleitringdichtung (9) zwischen der inneren Wandung dieses überragenden Teils und der äusseren Wandung des rohrförmigen Fortsatzes (8') des flexiblen Gliedes (4) angeordnet ist.

8. Rohrverbindung nach Anspruch 6 oder 7, dadurch gekennzeichnet, dass das wasserseitige Ende der verteilkammerseitigen Metallhülse (25) flanschartig erweitert ist, dass in den Ringraum zwischen Metallhülse (25) und der wasserseitigen Wandung der Wasserverteilkammer (1) eine Hülse (17) mit Innen- und Aussendichtung (18, 19) eingeschoben und gegen axiale Verschiebung gesichert ist und dass am wasserseitigen Ende der Hülse (17), distanziert von der genannten Metallhülse (25), ein Sicherungsring (27) eingebracht ist.

9. Rohrverbindung nach Anspruch 3, dadurch gekennzeichnet, dass das Isolierglied ein aussen mit Isoliermaterial (30) umhülltes Metallrohr (29) ist, auf welches eine Schrumpfhülse (31) aufgebracht ist, wobei die Schrumpfhülse (31) unter Zwischenschaltung einer Dichtung (19) in die Wandung der Wasserverteilkammer (1) eingepresst und dort gegen axiale Verschiebung gesichert ist.

10. Rohrverbindung nach Anspruch 9, dadurch gekennzeichnet, dass die Schrumpfhülse (31) aus einer korrosionsbeständigen Form-Gedächtnislegierung besteht.

11. Rohrverbindung nach einem der Ansprüche 1 bis 10, dadurch gekennzeichnet, dass das flexible Glied (4) im wesentlichen aus einem ein- oder mehrlagigem, armierten Wellrohr (10) mit beidseitig fest mit dem Wellrohr verbundenen Armaturen (5, 8) besteht.

12. Rohrverbindung nach Anspruch 1, dadurch gekennzeichnet, dass das flexible Glied ein Rohrkompensator (4') ist, dessen verteilkammerseitiges Ende (33, 34) unter Zwischenschaltung einer Dichtung (35) am wickelkopfseitigen Ende des Isoliergliedes (3'') befestigt ist.

13. Rohrverbindung nach Anspruch 12, dadurch gekennzeichnet, dass das Isolierglied ein Rohr (3'') aus Oxydkeramik ist, das an seinen beiden Enden mit Metallhülsen (25, 26') versehen ist.

14. Rohrverbindung nach Anspruch 12, dadurch gekennzeichnet, dass das Isolierglied ein aussen mit Isoliermaterial (30) umhülltes Metallrohr (29) ist, auf welches eine Schrumpfhülse (31) aufgebracht ist, wobei die Schrumpfhülse (31) unter Zwischenschaltung einer Dichtung (19) in die Wandung der Wasserverteilkammer (1) eingepresst und dort gegen axiale Verschiebung gesichert ist.

15. Rohrverbindung nach Anspruch 14, dadurch gekennzeichnet, dass die Schrumpfhülse (31) aus einer korrosionsbeständigen Gedächtnislegierung besteht.

**Claims**

1. Flexible, electrically-insulating pipe connection between the water manifold (1) und the manifold-side end (2) of the armature in a water-cooled rotor of an electric machine, in which the manifold-side portion of the pipe connection is formed as an insulating member (3'; 3''; 29, 30), and is arranged in the wall of the water manifold (1), while the armature-side portion of the pipe connection is movable relative to the insulating member (3'; 3''; 29, 30), in the longitudinal direction of the pipe connection, characterised in that, between the armature-side portion (5) and the insulating member (3'; 3''; 29, 30) there is a flexible member (4, 4'), which either is arranged to be displaceable relative to the insulating member (3'; 3''; 29, 30), or is movable in itself, in the longitudinal direction of the pipe connection, and which also allows the armature-side portion (5) to move transversely to the longitudinal direction of the pipe connection, while the manifold-side end (8) of the flexible member (4, 4') extends into the wall of the water manifold (1); and in that the flexible member (4, 4') and the armature-side end of the insulating member (3'; 3''; 29, 30) are surrounded by an insulating sleeve (23, 28) which leaves an annular space clear between itself and the flexible member (4, 4').

2. Pipe connection according to Claim 1, characterised in that there is a distance sleeve (22) in the area of the merging between the insulating member (3'; 3''; 29, 30) and the flexible member (4), and the sleeve surrounds the manifold-side end (8) of the flexible member (4) and extends into the insulating member (3'; 3''; 29, 30).

3. Pipe connection according to Claim 1 or 2, characterised in that the manifold-side end (8) of the flexible member (4) has a tubular extension (8'), which extends into a bore in the insulating member (3'; 3''; 29, 30), preferably without contact, and that there is a sliding ring seal, preferably a lip seal (9), between this extension (8') and the inner wall of the insulating member.

4. Pipe connection according to Claim 3, characterised in that the insulating member is constituted essentially by a tube (3'; 3'') of ceramic oxide.

5. Pipe connection according to Claim 4, characterised in that, on its outer periphery, the tube (3') of ceramic oxide has a collar (12), which abuts the end surface of a counterbore (15) in the water-side wall of the water manifold (1), and in that a sleeve (17) with inner and outer seals (19, 18) is pushed into the annular space between the tube (3') of ceramic oxide and the counterbore, and is secured against axial displacement.

6. Pipe connection according to Claim 4, characterised in that, at both ends, the tube (3'') of ceramic oxide has corrosion-resistant metal sleeves (25, 26) partly provided with sealing surfaces, which cooperate respectively with an inner seal (19) of a sleeve (17) set into the water-side wall of the water manifold (1), and with the sliding ring-seal (9) on the tubular extension (8') of the flexible member (4).

7. Pipe connection according to Claim 6, characterised in that the metal sleeve (26) on the armature-side end of the tube (3'') of ceramic oxide extends beyond the latter, and the sliding ring seal (9) is arranged between the inner wall of this projecting part and the outer wall of the tubular extension (8') of the flexible member (4).

8. Pipe connection according to Claim 6 or 7, characterised in that the water-side end of the manifold-side metal sleeve (25) is enlarged like a flange, in that a sleeve (17) with inner and outer seals (18, 19) is pushed into the annular space between the metal sleeve (25) and the water-side wall of the water manifold (1), and is secured against axial displacement, and in that a security ring (27), spaced from the said metal sleeve (25), is applied to the water-side end of the sleeve (17).

9. Pipe connection according to Claim 3, characterised in that the insulating member is a metal tube (29) surrounded externally with insulating material (30), onto which is applied a shrink sleeve (31), the shrink sleeve (31) being pressed against the wall of the water manifold (1) with interposition of a seal (19), and being secured there against axial displacement.

10. Pipe connection according to Claim 9, characterised in that the shrink sleeve (31) consists of a corrosion-resistant alloy with stress memory.

11. Pipe connection according to one of Claims 1 to 10, characterised in that the flexible member (4) consists essentially of a single-ply or multi-ply reinforced corrugated tube (10), with fittings (5, 8) at both ends, fixed to the corrugated tube.

12. Pipe connection according to Claim 1, characterised in that the flexible member is a pipe compensator (4'), the manifold-side end (33, 34) of which is fixed to the armature-side end of the insulating member (3''), with interposition of a seal (35).

13. Pipe connection according to Claim 12, characterised in that the insulating member is a tube (3'') of ceramic oxide, having metal sleeves (25, 26') at both its ends.

14. Pipe connection according to Claim 12, characterised in that the insulating member is a metal tube (29) surrounded externally with insulating material (30), onto which is applied a shrink sleeve (31), the shrink sleeve (31) being pressed against the wall of the water manifold (1) with interposition of a seal (19), and being secured there against axial displacement.

15. Pipe connection according to Claim 14, characterised in that the shrink sleeve (31) consists of a corrosion-resistant alloy with stress memory.

**Revendications**

1. Jonction de tuyauterie flexible et électriquement isolante entre la chambre de distribution d'eau (1) et l'extrémité côté chambre de distribution (2) de la tête d'enroulement du rotor refroidi à l'eau d'une machine électrique, dans laquelle la section côté chambre de distribution de la jonction de tuyauterie est constituée comme élément isolant (3', 3'', 29, 30) et est disposée dans la paroi de la chambre de distribution d'eau (1) tandis que la section côté tête d'enroulement de la jonction de tuyauterie peut se déplacer dans le sens longitudinal de la jonction de tuyauterie par rapport à l'élément isolant (3', 3'', 29, 30) caractérisée en ce qu'il est prévu entre la section côté tête d'enroulement (5) et l'élément isolant (3', 3'', 29, 30) un élement flexible (4, 4') qui peut se déplacer dans le sens longitudinal de la jonction de tuyauterie, par rapport à l'élément isolant (3', 3'', 29, 30) ou qui est mobile en soi et permet aussi un déplacement transversal par rapport à la direction longitudinale de la jonction de tuyauterie de la section (5) côté tête d'enroulement, l'extrémité (8) côté chambre de distribution de l'élément flexible (4, 4') pénétrant dans la paroi de la chambre de distribution d'eau (1) et en ce que l'élément flexible (4, 4') et l'extrémité côté tête d'enroulement de l'élément isolant (3', 3'', 29, 30) sont entourés d'une douille isolante (23, 28) créant un espace annulaire entre celle-ci et l'élément flexible (4, 4').

2. Jonction de tuyauterie selon la revendication 1, caractérisée en ce qu'une douille (22) servant d'entretoise est prévue dans la zone de transition entre l'élément isolant (3', 3'', 29, 30) et l'élément flexible (4), celle-ci entourant l'extrémité (8) côté chambre de distribution de l'élément flexible (4) et pénétrant dans l'élément isolant (3', 3'', 29, 30).

3. Jonction de tuyauterie selon la revendication 1 ou 2, caractérisée en ce que l'extrémité (8) côté chambre de distribution de l'élément flexible (4) est pourvue d'un prolongement tubulaire (8') qui pénètre, de préférence sans contact, dans un alésage de l'élément isolant (3', 3'', 29, 30) et en ce qu'un joint à anneau glissant, et de préférence un joint à lèvres (9), est prévu entre ce prolongement (8') et la paroi intérieure de l'élément isolant.

4. Jonction de tuyauterie selon la revendication 3, caractérisée en ce que l'élément isolant est constitué essentiellement par un tube (3', 3'') en oxyde céramique.

5. Jonction de tuyauterie selon la revendication 4, caractérisée en ce que le tube (3') en oxyde céramique est pourvu à sa périphérie extérieure d'un collet (12) qui prend appui par sa face frontale sur une cavité fraisée (15) dans la paroi côté eau de la chambre de distribution d'eau (1) et en ce qu'une douille (17) avec joint intérieur et extérieur (19, 18) est introduite dans l'espace annulaire entre le tube (3') en oxyde céramique et la cavité fraisée et qu'elle est fixée pour empêcher tout déplacement axial.

6. Jonction de tuyauterie selon la revendication 4, caractérisée en ce que le tube (3'') en oxyde céramique est pourvu de part et d'autre de douilles métalliques résistant à la corrosion (25, 26), qui sont pourvues partiellement de surfaces d'étanchéité correspondant à un joint intérieur (19) d'une douille (17) introduite dans la paroi côté eau de la chambre de distribution d'eau (1) ou au joint à anneau glissant (9) du prolongement tubulaire (8') de l'élément flexible (4).

7. Jonction de tuyauterie selon la revendication 6, caractérisée en ce que la douille métallique (26) fait saillie à l'extrémité côté tête d'enroulement du tube (3'') en oxyde céramique et en ce que le joint à anneau glissant (9) est disposé entre la paroi intérieure de cette partie dépassante et la paroi extérieure du prolongement tubulaire (8') de l'élément flexible (4).

8. Jonction de tuyauterie selon la revendication 6 ou 7, caractérisée en ce que l'extrémité côté eau de la douille métallique (25) côté chambre de distribution est élargie en forme de bride, en ce qu'une douille (17) avec un joint intérieur et un joint extérieur (18, 19) est introduite dans l'espace annulaire entre la douille métallique (25) et la paroi côté eau de la chambre de distribution d'eau (1) et qu'elle est fixée pour empêcher tout déplacement axial et en ce qu'un anneau de fixation (27) est disposé à l'extrémité côté eau de la douille (17) et à distance de ladite douille métallique (25).

9. Jonction pour tuyauterie selon la revendication 3, caractérisée en ce que l'élément isolant est un tube métallique (29) entouré extérieurement d'un matériau isolant (30) et sur lequel est disposée une douille rétractable (31), la douille rétractable (31) étant enfoncée dans la paroi de la chambre de distribution d'eau (1) avec interposition d'un joint (19) et y étant fixée pour empêcher tout déplacement axial.

10. Jonction de tuyauterie selon la revendication 9, caractérisée en ce que la douille rétractable (31) est constituée d'un alliage à mémoire de forme résistant à la corrosion.

11. Jonction de tuyauterie selon l'une des revendications 1 à 10, caractérisée en ce que l'élément flexible (4) est constitué essentiellement d'un tube ondulé (10) armé et à une ou plusieurs couches avec, de part et d'autre des accessoires (5, 8) fixés rigidement au tube ondulé.

12. Jonction de tuyauterie selon la revendication 1, caractérisée en ce que l'élément flexible est un compensateur pour tuyau (4') dont l'extrémité côté chambre de distribution (33, 34) est fixée avec interposition d'un joint (35) à l'extrémité côté tête d'enroulement de l'élément isolant (3'').

13. Jonction pour tuyauterie selon la revendication 12, caractérisée en ce que l'élément isolant est un tube (34) en oxyde céramique, qui est pourvu à ses deux extrémités de douilles métalliques (25, 26').

14. Jonction pour tuyauterie selon la revendication 12, caractérisée en ce que l'élément isolant est un tube métallique (29) entouré extérieurement d'un matériau isolant (30) et sur lequel est disposée une douille rétractable (31), la douille rétractable (31) étant enfoncée dans la paroi de la chambre de distribution d'eau (1) avec interposition d'un joint (19) et y étant fixée pour empêcher tout déplacement axial.

15. Jonction de tuyauterie selon la revendication 14, caractérisée en ce que la douille rétractable (31) est constituée d'un alliage à mémoire résistant à la corrosion.

Fig.1

Fig.1a

Fig.2

Fig.3

Fig.4

Fig.5